# EUROPEAN PATENT SPECIFICATION

(11) **EP 3 424 846 B1**
(45) Date of publication and mention of the grant of the patent: **19.08.2026**
(21) Application number: 18181784.2
(22) Date of filing: 04.07.2018
(51) Int. Cl.: B65G 7/08

(54) **APPARATUS FOR OVERTURNING A VESSEL**
VORRICHTUNG ZUM UMKIPPEN EINES BEHÄLTERS
APPAREIL POUR RETOURNER UN RÉCIPIENT

(30) Priority: 04.07.2017 CL 71 201701
(43) Date of publication of application: 09.01.2019
(73) Proprietor: Universidad de Talca, Talca (CL)
(72) Inventor: MORENO SIMUNOVIC, Yerko Marcelo, Talca (CL); SEPULVEDA LEON, Gloria Isabel, Talca (CL); MUÑOZ INOSTROSA, Gonzalo Eliseo, Talca (CL); GÓNZALEZ DONOSO, Luz María, Pencahue (CL)
(74) Representative: Clarke, Modet y Cía., S.L.

(56) References cited:
- GB-A- 857 839
- JP-U- S56 118 168
- US-A- 1 815 825
- US-A- 1 914 656
- US-A- 2 418 503
- US-A- 6 086 310
- US-B1- 9 139 262

## Description

### Technical field of the invention

The present invention is related to the field of devices for transportation or support of containers for storage or objects in general, specifically with appropriate devices for transportation or support of rigid or semi-rigid containers that have bodies formed by a single piece and in particular provides an apparatus for overturning vessels.

### Background of the invention

In the field of transportation and support of storage containers different devices have been developed to facilitate their handling, transportation and stacking.

For example, in the document EP 1066772 B1 it is described a support structure for barrels, designed for its application in large warehouses. This structure, besides being a support also allows the stacking of said barrels, which were horizontally stable, avoiding that said barrels bear the weight of the ones that are stacked on top of them. The support structure is designed for supporting two barrels situated side-by-side, so that when they are stacked on top of one another, only the support structure holds the weight over them obtaining this manner that the barrels bear solely its own load.

On the other hand, the document ES 2331497 B1 describes a mobile train formed by a system of cables for moving silos and large earthenware jars, allowing their loading and unloading. Specifically, the invention comprises a mobile train which can move thanks to the stretching and reduction of two hydraulic bottles. For fastening large earthenware jars and silos there are two cables of equal length that embrace the container by its base. These cables are joined to a third cable of variable length. Through the tightening of the cables, the two hydraulic bottles start to position the large earthenware jar and the silos horizontally, whereas if it is desired that the container is situated vertically to be deposited, the cables shall extend. This way, the invention achieves the relocation of large earthenware jars and silos in an easy and safely manner.

The document CN 204822394 U describes an utility model for a new ceramic wine jar that includes an assembly that comprises a body and a handle for the wine jar in order to facilitate its use. The upper part of said jar must have a smaller diameter than the body and the handle to achieve an assembly without trouble. Said body consists of a retaining plate equipped with a latch which is inserted in symmetrical orifices present in said plate. This utility model provides with a simple and practical structure and a convenient assembly which is non-slip and anti-spill.

Nevertheless, the technical solutions published, although most of them are simple, does not have the ability of providing support to the containers which allows at the same time these to be transported manually through this same support.

On the other hand, the prior art provides apparatus for transporting, overturning, lifting or reorienting objects. For example, the document JP S56 118 168 U describes an apparatus for transporting and overturning vessels comprising a frame formed by a plurality of bars in which the load rests.

The document US 2,418,503 A describes a device for transporting barrels, comprising a frame including a structure being complementary to the shape of said barrel. Said frame is formed by a series of bars.

The document US 9,139,262 B1 describes an apparatus for lifting, transporting and reorienting objects, which includes a pair of plates placed alongside the object of interest. Said plates do not include a surface being complementary to the shape of the object, but the object is placed between said plates and secured by fixing means.

Document JP S56118168 U discloses a position changing operation tool for a drum pile.

### Summary of the invention

The present invention consists of an overturning apparatus for vessels as defined in claim 1.

In a preferred execution of the present invention, said solid body that forms the overturning apparatus has a plate shape and the essentially flat surface ends in a rounded portion in the bottom end of said solid body which additionally may include removable wheels to make easier its transportation.

In another preferred execution of the invention, the apparatus may be comprised of two identical solid bodies which are in a opposite position one of each other and whose surfaces which are complementary to the shape of the vessel serve as support to hold it in a safely manner when the vessel is overturned. In a more preferred execution, these solid bodies are placed in parallel, one from another. To join and maintain said solid bodies fixed, in a preferred execution of the invention at least two crossbeams are used which are placed between or at the upper or bottom ends of the solid bodies.

In order to facilitate the transportation and the overturning of the vessel, the apparatus of the invention optionally presents a perforation in its upper and lower portion whose diameter is complementary to the one of a cylindrical rod that eventually could be inserted in said perforations.

The overturning apparatus of the invention preferably use clamping elements such as straps or ropes which are fastened to the neck, to the base of said vessel or both parts. Additionally, it may also include a third clamping element such as a third strap or rope connecting those that fasten the neck and the base of the vessel. All these clamping elements may also include respective pieces for its length adjustment.

### Brief description of the figures

Figure 1 shows a first execution of the overturning apparatus for vessels which is the subject of the present invention, with the solid body in a side view.
Figure 2 shows a first execution of the overturning apparatus for vessels which is the subject of the present invention, with the solid body in a front view.
Figure 3 shows a first execution of the overturning apparatus for vessels which is the subject of the present invention, with the solid body in a top view.
Figure 4 shows a plane of the overturning apparatus for vessels which is the subject of the present invention, with the solid body in a side view.

### Detailed description of the invention

Hereinafter the invention will be described in detail, referring to this purpose to the figures.

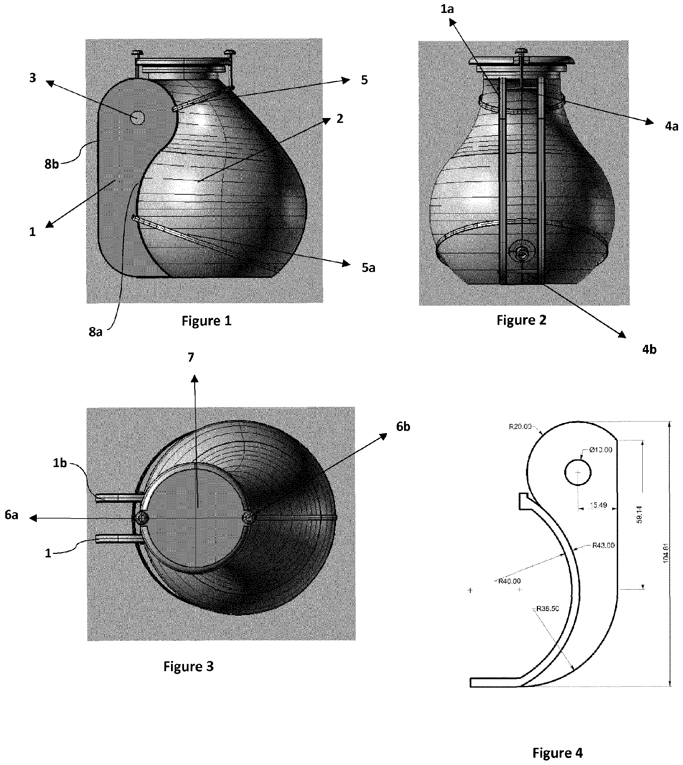

First of all, the invention provides an overturning apparatus for vessels (Figure 1). Said overturning apparatus, generally speaking, presents a solid body (1) and a clamping element (5) which holds the solid body (1) together with the vessel (2).

Said solid body comprises two ends, upper and lower. The upper end is adjacent to the neck of the vessel, while the lower end of said solid body is attached to the base of said vessel.

The solid body (1) has plate shape, defining plate as a rigid sheet that leaves its thickness to free choice. Said solid body (1) defines two opposite surfaces. One of these surfaces, defined by said plate, is a complementary surface (8a) to the shape of the vessel (2), through which fits together to the same. The opposite surface (8b) to the previous one, also defined by said plate (1a) is essentially flat facilitating this way the support of the vessel (2) when this is overturned, understanding as essentially flat that said surface, in most of its part does not show changes in its plane.

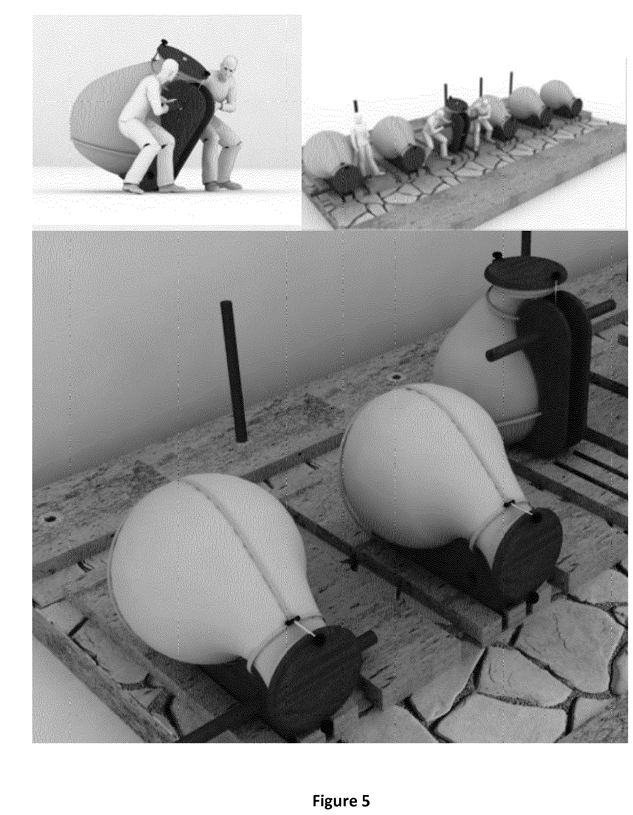

The solid body (1) at its upper end is rounded, while the essentially flat surface (8b) at its lower end ends in a portion that it is also rounded. In a preferred execution, the solid body may have a perforation both in its upper and lower section (3a and 3b), which will have a diameter complementary to the one of a cylindrical rod that in a preferred execution is inserted in said perforation (3a and 3b), to facilitate the transportation and/or overturning of the vessel (Figure 5).

The apparatus comprises a first solid body (1) and a second solid body (1a) which are identical, and that are placed facing each other. Said first solid body (1) and said second solid body (1a) are placed in parallel to one another. To join and hold fixed said solid bodies to one another, preferentially at least two crossbeams (4a) and (4b) are used which are placed between the upper and lower ends of the solid bodies, as it is shown in Figure 2. Nevertheless, the possibility of using different means to maintain fixed said solid bodies (1, 1a) to one another remains open.

In order to the solid bodies (1, 1a) safely fits together to vessel (2), a clamping element will be used (5) such as a rope or strap which will be placed around the neck of the vessel (2). In a preferred execution, it is possible to use a second clamping element (5a) which surrounds the base of the vessel (2). These clamping elements (5) and (5a) may have a part capable of adjusting the length of said clamping elements such as buckles and tensioners.

In an additional preferred execution, a third clamping element may be included (5b) which will join together clamping elements (5) and (5a). In this case, it is also possible to use a length adjustment piece of said third clamping element, in order to provide a more adjusted holding with respect to the vessel.

In another preferred execution, as it is shown in figures 1 and 2, two through bolts (6a) and (6b) may be incorporated which will adjust the cover (7) of the vessel (2). One of said bolts is joined to the clamping element (5), while the second of said bolts is joined to the crossbeam (4a).

Finally, in a preferred execution, a rotation element may be included, for example a wheel, which is removable. Said rotation element will be mounted in the rounded lower section of the solid body (1) (not shown).

Hereinafter, execution examples of the present invention will be described. It should be understood that said examples are looking to provide a better understanding of the present invention, however do not limit the scope of the same.

### Example 1: Construction of the Overturning Apparatus for Vessels.

An overturning apparatus for vessels was built using the following specifications (Figure 4):
- A solid body (1) with plate shape that measures 105 cm. from its upper to its lower end.
- The essentially flat surface of the solid body (1) has a length measurement of 60 cm.
- The upper end of said solid body (1) will have a rounded shape with a radius of 20 cm.
- The upper end of the solid body (1) presents a perforation (3a) with a diameter of 10 cm, at a distance of 16 cm measured from the outer face of the solid body.
- The lower end of the solid body (1) will have a rounded shape with a radius of 38.50 cm. measured from a portion of the vessel (2) and presents a perforation (3b) with a diameter of 10 cm.

### Example 2: Mode of use of the Overturning Apparatus for Vessels.

The overturning apparatus for vessels of the present invention is used as follows:
- In order to the overturning apparatus to be fixed vertically with respect to the vessel, the two clamping elements (5) and (5a) are used which are fit to the neck of the vessel and to the lower portion of the body of said vessel, respectively.
- The perforation (3) is adjacent to the neck of the vessel.
- In order to the vessel can overturn, a bar is used which is inserted in the perforation (3), to be used as a handle (Figure 5).
- Depending on the size of the vessel, one person or two people are placed in front of the overturning apparatus if the vessel is small and can be overturned by a single person, or on both sides of the upper end of the overturning apparatus if the vessel is large as shown in Figure 5. A single person can pull the overturning apparatus towards itself, allowing that the vessel positions horizontally over said overturning apparatus. The two people will help each other, one on each side, holding the bar which goes through the perforation (3) of the overturning apparatus and pulling downwards simultaneously said overturning apparatus, until also achieving that the vessel rests horizontally on the same.
- The overturning apparatus is supported by the essentially flat part in the surface that is allocated for that, constituting itself as a sort of base or support of the overturned vessel, which in this way rests horizontally on the overturning apparatus.
- Said surface where the overturning apparatus rests with the vessel on top of it, may additionally include parallel slots where the solid bodies of the overturning apparatus fit together perfectly, providing this way greater stability to the overturning apparatus-vessel set located horizontally (Figure 5).

## Claims

1. An overturning apparatus for vessels comprising two identical solid bodies (1, 1a), each of said solid bodies (1, 1a) defining a concave surface (8a) complementary to an external convex shape of the vessel (2), **CHARACTERIZED in that**:
- each of said solid bodies (1, 1a) has a plate shape;
- each of said solid bodies (1, 1a) is facing each other in parallel;
- each of said solid bodies (1, 1a) also defines a surface (8b) being essentially flat, wherein said surface (8b) of each solid bodies (1, 1a) are not connected to each other by a base or framework, wherein said surface (8b) being essentially flat is opposed to said surface (8a) being complementary to the external shape of the vessel, and wherein said surface (8a) being complementary to the external shape of the vessel facilitates the support of the vessel (2) when this is overturned;
wherein said apparatus additionally comprises a clamping element (5) of the solid bodies (1, 1a) to said vessel (2); and
wherein said solid bodies (1, 1a) are held fixed with respect to each other by appropriate fastening means.

2. The overturning apparatus for vessels of claim 1, **CHARACTERIZED in that** each of said essentially flat surfaces (8a) ends in a rounded portion at the lower end of each of said solid bodies (1, 1a).

3. The overturning apparatus for vessels of claim 1, **CHARACTERIZED in that** said fastening means are crossbeams (4a,4b) placed between or at the upper and lower ends of the solid bodies (1, 1a).

4. The overturning apparatus for vessels of claim 1, **CHARACTERIZED in that** each of said solid bodies (1, 1a) presents a perforation (3) in its upper portion and **in that** said apparatus additionally comprises a cylindrical rod which is inserted in said perforations (3) and whose diameter is complementary to the diameter of said perforations (3).

5. The overturning apparatus for a vessel of claim 1, **CHARACTERIZED in that** said clamping element (5) is a strap or a rope.

6. The overturning apparatus for a vessel of claim 5, **CHARACTERIZED in that** said strap or rope is fastened to the neck or base of said vessel (2) or to both of them.

7. The overturning apparatus for a vessel of claim 5, **CHARACTERIZED by** comprising three straps or ropes, a first one (5) fastened to the neck of said vessel (2), a second one (5a) fastened to the base of said vessel (2) and a third one that connects the first and second straps or ropes (5, 5a).

8. The overturning apparatus for a vessel of claim 5, **CHARACTERIZED in that** said strap or rope comprises a length adjustment part.

9. The overturning apparatus for a vessel of claim 2, **CHARACTERIZED by** having wheels attached to said solid bodies (1, 1a) at the lower ends in said rounded portions.

## Patentansprüche

1. Umkippvorrichtung für Behälter, umfassend zwei identische Festkörper (1, 1a), wobei jeder der Festkörper (1, 1a) eine konkave Oberfläche (8a) definiert, die komplementär zu einer äußeren konvexen Form des Behälters (2) ist, **DADURCH GEKENNZEICHNET, dass:**
- jeder der Festkörper (1, 1a) eine Plattenform aufweist;
- jeder der Festkörper (1, 1a) dem anderen parallel zugewandt ist;
- jeder der Festkörper (1, 1a) zudem eine im Wesentlichen flache Oberfläche (8b) definiert, wobei die Oberflächen (8b) jedes Festkörpers (1, 1a) nicht durch eine Basis oder einen Rahmen miteinander verbunden sind, wobei die im Wesentlichen flache Fläche (8b) der zur äußeren Form des Behälters komplementären Oberfläche (8a) gegenüberliegt und wobei die zur äußeren Form des Behälters komplementäre Oberfläche (8a) das Stützen des Behälters (2) beim Umkippen erleichtert;
wobei die Vorrichtung zusätzlich ein Element (5) zum Spannen der Festkörper (1, 1a) an dem Behälter (2) umfasst; und
wobei die Festkörper (1, 1a) durch geeignete Befestigungsmittel relativ zueinander fixiert gehalten werden.

2. Umkippvorrichtung für Behälter nach Anspruch 1, **DADURCH GEKENNZEICHNET, dass** jede der im Wesentlichen flachen Oberflächen (8a) am unteren Ende jedes der Festkörper (1, 1a) in einem abgerundeten Abschnitt endet.

3. Umkippvorrichtung für Behälter nach Anspruch 1, **DADURCH GEKENNZEICHNET, dass** die Befestigungsmittel Querträger (4a, 4b) sind, die zwischen oder an den oberen und unteren Enden der Festkörper (1, 1a) platziert sind.

4. Umkippvorrichtung für Behälter nach Anspruch 1, **DADURCH GEKENNZEICHNET, dass** jeder der Festkörper (1, 1a) in seinem oberen Abschnitt eine Bohrung (3) aufweist und dass die Vorrichtung zusätzlich eine zylindrische Stange umfasst, die in die Bohrungen (3) eingeführt ist und deren Durchmesser komplementär zum Durchmesser der Bohrungen (3) ist.

5. Umkippvorrichtung für Behälter nach Anspruch 1, **DADURCH GEKENNZEICHNET, dass das** Spannelement (5) ein Band oder ein Seil ist.

6. Umkippvorrichtung für Behälter nach Anspruch 5, **DADURCH GEKENNZEICHNET, dass** das Band oder Seil am Hals oder an der Basis des Behälters (2) oder an beiden befestigt ist.

7. Umkippvorrichtung für Behälter nach Anspruch 5, **DADURCH GEKENNZEICHNET, dass** sie drei Bänder oder Seile umfasst, wobei ein erstes (5) am Hals des Behälters (2) befestigt ist, ein zweites (5a) an der Basis des Behälters (2) befestigt ist und ein drittes das erste und das zweite Band oder Seil (5, 5a) miteinander verbindet.

8. Umkippvorrichtung für Behälter nach Anspruch 5, **DADURCH GEKENNZEICHNET, dass** das Band oder Seil einen Längenverstellteil umfasst.

9. Umkippvorrichtung für Behälter nach Anspruch 2, **DADURCH GEKENNZEICHNET, dass** an den unteren Enden der Festkörper (1, 1a) in den abgerundeten Abschnitten Räder angebracht sind.

## Revendications

1. Appareil de renversement pour récipients comprenant deux corps solides identiques (1, 1a), chacun desdits corps solides (1, 1a) définissant une surface concave (8a) complémentaire à une forme convexe externe du récipient (2), **CARACTÉRISÉ EN CE QUE :**
- chacun desdits corps solides (1, 1a) présente une forme de plaque ;
- chacun desdits corps solides (1, 1a) est disposé en regard de l'autre parallèlement ;
- chacun desdits corps solides (1, 1a) définit également une surface (8b) essentiellement plane, dans lequel lesdites surfaces (8b) de chacun des corps solides (1, 1a) ne sont pas reliées l'une à l'autre par une base ou une armature, dans lequel ladite surface (8b) essentiellement plane est opposée à ladite surface (8a) complémentaire à la forme externe du récipient, et dans lequel ladite surface (8a) complémentaire à la forme externe du récipient facilite le support du récipient (2) lorsque celui-ci est renversé ;
dans lequel ledit appareil comprend en outre un élément de serrage (5) des corps solides (1, 1a) sur ledit récipient (2) ; et
dans lequel lesdits corps solides (1, 1a) sont maintenus fixes l'un par rapport à l'autre au moyen de moyens de fixation appropriés.

2. Appareil de renversement pour récipients selon la revendication 1, **CARACTÉRISÉ EN CE QUE** chacune desdites surfaces essentiellement planes (8a) se termine par une partie arrondie à l'extrémité inférieure de chacun desdits corps solides (1, 1a).

3. Appareil de renversement pour récipients selon la revendication 1, **CARACTÉRISÉ EN CE QUE** lesdits moyens de fixation sont des traverses (4a, 4b) placées entre les corps solides (1, 1a) ou à leurs extrémités supérieure et inférieure.

4. Appareil de renversement pour récipients selon la revendication 1, **CARACTÉRISÉ EN CE QUE** chacun desdits corps solides (1, 1a) présente une perforation (3) dans sa partie supérieure et **en ce que** ledit appareil comprend en outre une tige cylindrique qui est insérée dans lesdites perforations (3) et dont le diamètre est complémentaire au diamètre desdites perforations (3).

5. Appareil de renversement pour un récipient selon la revendication 1, **CARACTÉRISÉ EN CE QUE** ledit élément de serrage (5) est une sangle ou une corde.

6. Appareil de renversement pour un récipient selon la revendication 5, **CARACTÉRISÉ EN CE QUE** ladite sangle ou corde est fixée au col ou à la base dudit récipient (2), ou aux deux.

7. Appareil de renversement pour un récipient selon la revendication 5, **CARACTÉRISÉ EN CE QU'il** comprend trois sangles ou cordes, une première (5) fixée au col dudit récipient (2), une deuxième (5a) fixée à la base dudit récipient (2) et une troisième reliant les première et deuxième sangles ou cordes (5, 5a).

8. Appareil de renversement pour un récipient selon la revendication 5, **CARACTÉRISÉ EN CE QUE** ladite sangle ou corde comprend une partie de réglage de longueur.

9. Appareil de renversement pour un récipient selon la revendication 2, **CARACTÉRISÉ EN CE QU'**il comporte des roues fixées auxdits corps solides (1, 1a) à leurs extrémités inférieures au niveau desdites parties arrondies.
